# FASCICULE DE BREVET EUROPEEN

(11) **EP 0 433 179 B1**
(45) Date de publication et mention de la délivrance du brevet: **01.03.1995**
(21) Numéro de dépôt: 90403615.9
(22) Date de dépôt: 14.12.1990
(51) Int. Cl.: G21C 1/09, G21D 1/02

(54) **Procédé de remplacement d'élement chauffant de préssuriseur de réacteur nucleaire et dispositif utilisé dans un tel procédé**
Verfahren für das Ersetzen einer Heizung eines Druckausgleichgefässes in einem Kernreaktor und in einem solchen Verfahren verwendete Vorrichtung
Procedure for replacing a heater of a pressurizer in a nuclear reactor and device used in such a procedure

(30) Priorité: 15.12.1989 FR 8916657
(43) Date de publication de la demande: 19.06.1991
(73) Titulaire: ELECTRICITE DE FRANCE Service National, 75008 Paris (FR)
(72) Inventeur: Thapon, Gérard, F-91200 Athis Mons (FR); Azherad, Eric, F-75020 Paris (FR); Durand, Bernard, F-13008 Marseille (FR); Francois, Daniel, F-13009 Marseille (FR)
(74) Mandataire: Gutmann, Ernest

(56) Documents cités:
- DE-A- 3 013 562
- FR-A- 2 540 575
- GB-A- 929 118
- GB-A- 1 035 199
- US-A- 3 688 069
- US-A- 3 818 786

## Description

La présente invention concerne le remplacement d'un élément chauffant dans un pressuriseur de réacteur nucléaire à eau sous-pression, pressuriseur du type comprenant une cuve de résistance à la pression comportant des tubulures, externes à la cuve, de traversée étanche du fond de cuve par des éléments chauffants verticaux électriques à effet Joule, et lesdits éléments chauffants verticaux comprenant chacun une gaine cylindrique en alliage métallique pénétrant dans la cuve au travers d'une tubulure correspondante desdites tubulures externes, chaque gaine étant munie, dans sa partie basse, de moyens de butée longitudinale contre l'extrémité inférieure de ladite tubulure externe correspondante sur laquelle lesdits moyens de butée sont soudés.

Les éléments chauffants d'un pressuriseur de réacteur nucléaire à eau sous pression sont soumis à des pressions et des températures importantes, qui peuvent entraîner une dégradation et un mauvais fonctionnement à terme de certains d'entre eux. Il est donc apparu nécessaire de remplacer les éléments défectueux.

Actuellement, on connaît essentiellement un type de procédé de remplacement d'élément chauffant. Un premier opérateur tronçonne manuellement la tubulure externe de traversée de l'élément à remplacer, un second opérateur retenant l'élément qui, autrement, tomberait du fait de son poids. On retire ensuite l'élément et on chanfreine l'extrémité de la tubulure restée solidaire de la cuve du pressuriseur. Un élément neuf est alors introduit dans la tubulure, puis soudé de façon externe, sous argon et avec métal d'apport, sur l'extrémité chanfreinée de la tubulure restée solidaire de la cuve.

Ce procédé présente des inconvénients. Il constitue notamment une opération longue, délicate, effectuée par des opérateurs dans des conditions d'accès difficiles, rendues hostiles par la radioactivité émanant du pressuriseur.

Le taux d'échec du soudage de l'élément neuf sur la tubulure restée solidaire du pressuriseur est important. Or, un échec nécessite de recouper la tubulure ce qui augmente les coûts de remplacement. En cas d'échecs répétés on peut même être amené à condamner la tubulure par un bouchon après taraudage, opération supplémentaire également difficile et coûteuse.

La présente invention permet de minimiser, voir d'éliminer ces inconvénients. Elle vise à fournir un procédé de remplacement d'élément chauffant de pressuriseur et un dispositif de mise en oeuvre partielle de ce procédé, répondant mieux que ceux antérieurement connus aux exigences de la pratique, notamment en ce qu'ils permettent le remplacement d'un élément chauffant de façon automatique, ce qui entraîne une réduction de l'exposition du personnel à l'irradiation, avec un coût de remplacement globalement moindre, et avec un taux de réussite du soudage grandement amélioré, puisqu'il avoisine 100%.

Dans ce but, l'invention propose notamment un procédé de remplacement d'un élément chauffant dans un pressuriseur du type ci-dessus défini, procédé suivant lequel :
(a) on coupe transversalement la tubulure externe de l'élément à remplacer, sans entamer ou sensiblement entamer ledit élément traversant ladite tubulure,
(b) on enlève ledit élément de la portion de tubulure restée solidaire de la cuve et,
(c) on chanfreine l'extrémité de ladite portion, caractérisé en ce que
(d) on soude automatiquement sous atmosphère inerte ou sensiblement inerte, la face interne de l'extrémité de ladite portion avec la face interne de l'extrémité supérieure d'un manchon de même diamètre interne et externe, préalablement positionné bout à bout avec ladite portion,
(e) on soude automatiquement, sous atmosphère inerte ou sensiblement inerte, la face externe de l'extrémité de ladite portion avec la face externe de l'extrémité supérieure dudit manchon,
(f) on introduit dans la cuve via le manchon et la portion de tubulure correspondante, la gaine de l'élément chauffant neuf jusqu'à ce que les moyens de butée de ladite gaine soient en contact avec l'extrémité inférieure dudit manchon, lesdits moyens de butée étant dans un alliage provenant d'une même coulée de fabrication que celui du manchon, et
(g) on soude automatiquement la face externe de l'extrémité supérieure des moyens de butée avec la face externe de l'extrémité inférieure du manchon.

Le soudage des faces d'extrémité entre elles est effectué sur l'ensemble de leurs circonférences.

Le fort taux d'échec observé pour remplacer un élément défectueux dans l'art antérieur, provient notamment des difficultés rencontrées par les opérateurs lors du soudage.

Il s'agit d'une part de difficultés de soudabilité dues aux conditions opératoires, et d'autre part de difficultés d'origine métallurgique provenant probablement d'une différence de composition physico-chimique entre l'alliage métallique de la portion de tubulure restée solidaire du pressuriseur et l'alliage métallique, a priori identique, mais provenant en général d'une coulée de fabrication différente, des moyens de butée de l'élément neuf.

Il existe, en effet, des différences entre chaque coulée lors de la fabrication d'un alliage, et en particulier lors de la fabrication de l'acier inoxydable 316 L, le plus souvent utilisé pour fabriquer les pressuriseurs de réacteur nucléaire à eau sous pression.

Ces différences semblent à l'origine d'une partie importante des défaillances observées sur les soudures lors d'un remplacement d'élément.

Avec le procédé selon l'invention, on élimine pratiquement tous ces inconvénients. Le soudage est automatique et permet donc de mieux pallier aux maladresses humaines. L'utilisation d'un manchon intermédiaire soudé de façon interne puis externe sur la portion de tubulure restée solidaire de la cuve, permet, par ailleurs, d'améliorer encore le taux de réussite du soudage, qui avoisine 100%.

De façon expérimentale, on a pu, en effet, constater que la réalisation en automatique d'une première passe interne entre deux pièces à raccorder avant d'effectuer une ou plusieurs passes de soudage externe avec métal d'apport, sous atmosphère inerte ou sensiblement inerte, par exemple sous argon, permettait de s'affranchir des différences entre coulées d'un même alliage.

L'utilisation d'un alliage de même coulée pour le manchon et les moyens de butée de l'élément neuf assure ensuite la réussite de la soudure externe de l'un avec l'autre.

Dans un mode avantageux de réalisation, pour souder automatiquement le manchon à la portion de tubulure,
- on fixe à ladite portion de tubulure restée solidaire de la cuve, un premier dispositif de soudage automatique sous atmosphère inerte ou sensiblement inerte, commandé à distance, dans lequel le manchon a été préalablement mis en place, ledit dispositif positionnant automatiquement l'extrémité supérieure du manchon dans l'axe de la tubulure et contre l'extrémité chanfreinée de ladite portion, et comprenant une tête de soudage interne apte à souder automatiquement la face interne de l'extrémité supérieure du manchon avec la face interne de l'extrémité chanfreinée de ladite portion de tubulure restée solidaire de la cuve,
- on soude automatiquement lesdites faces internes l'une avec l'autre sur l'ensemble de leurs circonférences,
- on enlève le premier dispositif de soudage automatique de ladite portion de tubulure,
- on fixe à ladite portion, un deuxième dispositif de soudage automatique sous atmosphère inerte ou sensiblement inerte, commandé à distance, comportant une tête de soudage externe apte à souder automatiquement la face externe de l'extrémité supérieure du manchon, avec la face externe de l'extrémité chanfreinée de la portion de tubulure restée solidaire de la cuve, et
- on soude automatiquement lesdites faces externes l'une avec l'autre sur l'ensemble de leurs circonférences.

Dans un mode de réalisation également avantageux, avant introduction de la gaine de l'élément chauffant neuf dans la cuve, on fixe à ladite gaine un troisième dispositif de soudage au niveau des moyens de butée de ladite gaine, puis, pour réaliser le soudage desdits moyens de butée avec le manchon,
- on fixe audit manchon ledit troisième dispositif agencé pour positionner automatiquement l'extrémité supérieure des moyens de butée dudit élément neuf contre l'extrémité inférieure du manchon, ledit dispositif comprenant une tête de soudage externe apte à souder automatiquement la face externe de l'extrémité supérieure des moyens de butée avec la face externe de l'extrémité inférieure du manchon, et
- on soude automatiquement lesdites faces externes l'une avec l'autre sur l'ensemble de leurs circonférences.

Dans un autre mode de réalisation avantageux, pour couper transversalement la tubulure externe de l'élément à remplacer,
- on fixe en deux emplacements, espacés verticalement, de la tubulure externe de l'élément chauffant à remplacer, un dispositif commandé à distance, de coupe transversale et automatique de ladite tubulure, et
- on coupe transversalement et automatiquement ladite tubulure avec ledit dispositif entre les deux emplacements de fixation, la portion de tubulure, coupée et soudée aux moyens de butée de l'élément, restant maintenue par ledit dispositif contre la portion de tubulure restée solidaire de la cuve, après la coupe.

La coupe automatique, commandée à distance, et le maintien de l'élément chauffant, après la coupe, par le dispositif, permettent notamment de réduire le temps d'exposition à l'irradiation des opérateurs.

Avantageusement, on réalise également automatiquement le chanfreinage de l'extrémité de la portion de tubulure restée solidaire de la cuve.

Dans d'autres modes de réalisation avantageux, on a de plus recours à l'une et ou à l'autre des dispositions suivantes :
- le soudage de l'extrémité supérieure du manchon avec l'extrémité inférieure de la portion de tubulure est constitué par une passe de soudage sans métal d'apport sur les faces internes et deux passes de soudage avec métal d'apport sur les faces externes,
- le soudage est du type TIG, le courant de soudage étant pulsé,
- l'atmosphère sensiblement inerte est du gaz inerte hydrogèné à de l'ordre de 3% en poids d'hydrogène par rapport au poids de gaz inerte.

L'invention propose également un dispositif de soudage sous gaz inerte de l'extrémité inférieure d'une première pièce verticale cylindrique avec l'extrémité supérieure d'une seconde pièce verticale cylindrique de même diamètre disposée dans le prolongement axial de ladite première pièce, caractérisé en ce qu'il comprend:
- une chambre sensiblement étanche de rétention du gaz comprenant une paroi supérieure percée d'une ouverture de passage de l'extrémité inférieure de la première pièce, ladite ouverture étant munie de moyens de fixation de ladite chambre sur ladite première pièce, des parois latérales, et une paroi inférieure montée rotativement autour de l'axe desdites pièces, sur les parois latérales, ladite chambre étant munie de moyens de centrage transversal et de maintien longitudinal, par rapport à la chambre, de la seconde pièce, lesdits moyens étant agencés pour plaquer longitudinalement et dans leur prolongement axial, l'extrémité supérieure de ladite seconde pièce contre l'extrémité inférieure de ladite première pièce à l'intérieur de ladite chambre,
- des moyens de soudage fixés à ladite paroi inférieure, agencés pour souder les extrémités inférieure et supérieure respectives desdites pièces, et
- des moyens de rotation automatique de ladite paroi inférieure autour de l'axe desdites pièces, par rapport à la chambre.

Dans des modes de réalisation avantageux, on a de plus recours à l'une et/ou à l'autre des dispositions suivantes :
- les moyens de soudage sont des moyens de soudage interne comprenant une tête de soudage apte à souder automatiquement la face interne de l'extrémité inférieure de la première pièce avec la face interne de l'extrémité supérieure de la seconde pièce;
- les moyens de soudage sont des moyens de soudage externe comprenant une tête de soudage externe apte à souder automatiquement la face externe de l'extrémité inférieure de la première pièce, avec la face externe de l'extrémité supérieure de la seconde pièce;
- les moyens de fixation de la chambre sur la première pièce comprennent des mâchoires de serrage sur ladite première pièce, actionnées pneumatiquement.

L'invention sera mieux comprise à la lecture de la description qui suit de modes particuliers de réalisation, donné à titres d'exemple non limitatif.

La description se réfère aux dessins qui l'accompagnent dans lesquels :
- La figure 1 est une vue schématique en perspective, en partie éclatée, d'un pressuriseur de réacteur nucléaire à eau sous pression.
- La figure 2 montre schématiquement les étapes du procédé de remplacement d'un élément chauffant de pressuriseur, selon le mode de réalisation de l'invention plus particulièrement décrit ici.
- La figure 3 est une vue latérale en élévation et partiellement en coupe, d'un mode de réalisation d'un dispositif de coupe automatique mis en oeuvre dans le procédé de la figure 2.
- La figure 4 est une vue latérale en élévation et partiellement en coupe d'un mode de réalisation d'un dispositif de chanfreinage mis en oeuvre dans le procédé de la figure 2.
- La figure 5 est une vue latérale en élévation et en coupe de la chambre du dispositif de soudage selon un mode de réalisation de l'invention mis en oeuvre dans le procédé de la figure 2.
- La figure 6 est une vue schématique latérale et en coupe, montrant le dispositif de soudage du manchon sur la tubulure, selon un mode de réalisation de l'invention avec tête de soudage interne mis en oeuvre dans le procédé de la figure 2.
- La figure 7 est une vue schématique latérale et en coupe, montrant le dispositif de soudage du manchon sur la tubulure selon un mode de réalisation avec tête de soudage externe, mis en oeuvre dans le procédé de la figure 2.
- La figure 8 est une vue schématique latérale et en coupe, montrant le dispositif de soudage de l'élément neuf sur le manchon selon un autre mode de réalisation avec tête de soudage externe, mis en oeuvre dans le procédé de la figure 2,

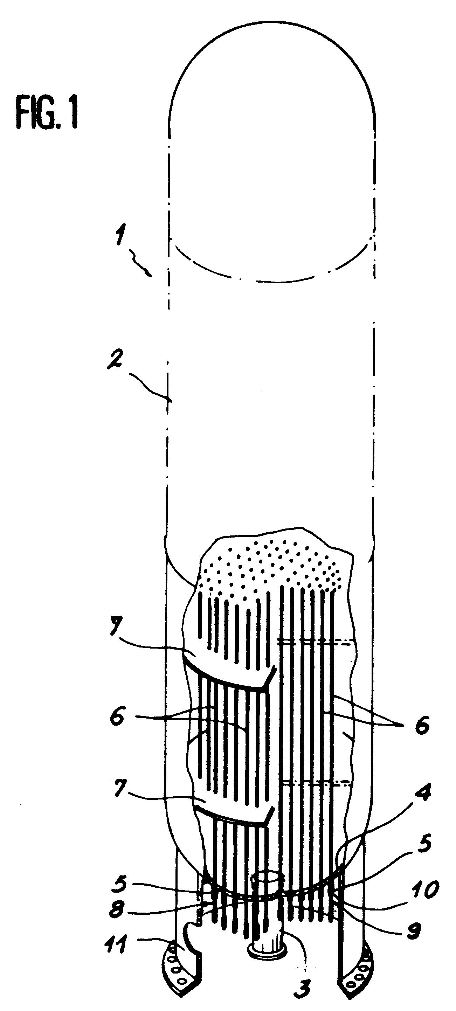

La figure 1 montre schématiquement un pressuriseur 1 du type utilisé pour le maintien en pression du circuit primaire d'un réacteur nucléaire à eau sous pression. Le pressuriseur 1 comporte une cuve 2 de résistance à la pression (remplie d'eau en fonctionnement). L'intérieur du pressuriseur est connecté au circuit primaire (non représenté) du réacteur par une tuyauterie de raccordement 3 situé en fond 4 de la cuve 2.

Le pressuriseur comporte plusieurs tubulures 5, par exemple quatre vingt, externes à la cuve et solidaires du fond 4 du pressuriseur auquel elles ont été fixées par soudage. Ces tubulures sont sensiblement verticales et conçues pour permettre la traversée du fond de cuve par des éléments chauffants verticaux 6 électriques à effet Joule, chaque élément chauffant passant respectivement par une tubulure correspondante différente. Les éléments chauffants 6 sont, par ailleurs, entretoisés ou maintenus, à l'intérieur de l'enceinte 2, par des plaques perforées 7, qu'ils traversent au droit desdites perforations. Le diamètre interne des tubulures est de l'ordre de 20 mm. Chaque élément chauffant comporte une gaine cylindrique en alliage métallique qui est, en règle générale, dans le cas des réacteurs nucléaires à eau sous pression de l'acier 316L ou Z₂CND 17-13.

Chaque gaine est munie dans sa partie basse 8, de moyens 9 de butée longitudinale contre l'extrémité inférieure 10 de la tubulure externe correspondante sur laquelle lesdits moyens de butée sont soudés.

Une jupe ou couronne 11 de fixation et de support du pressuriseur est prévue. L'intérieur de cette jupe est accessible par un trou d'homme, pour venir opérer sous le fond 4 de la cuve 2 du pressuriseur et accéder ainsi aux parties basses des éléments chauffants que l'on veut remplacer.

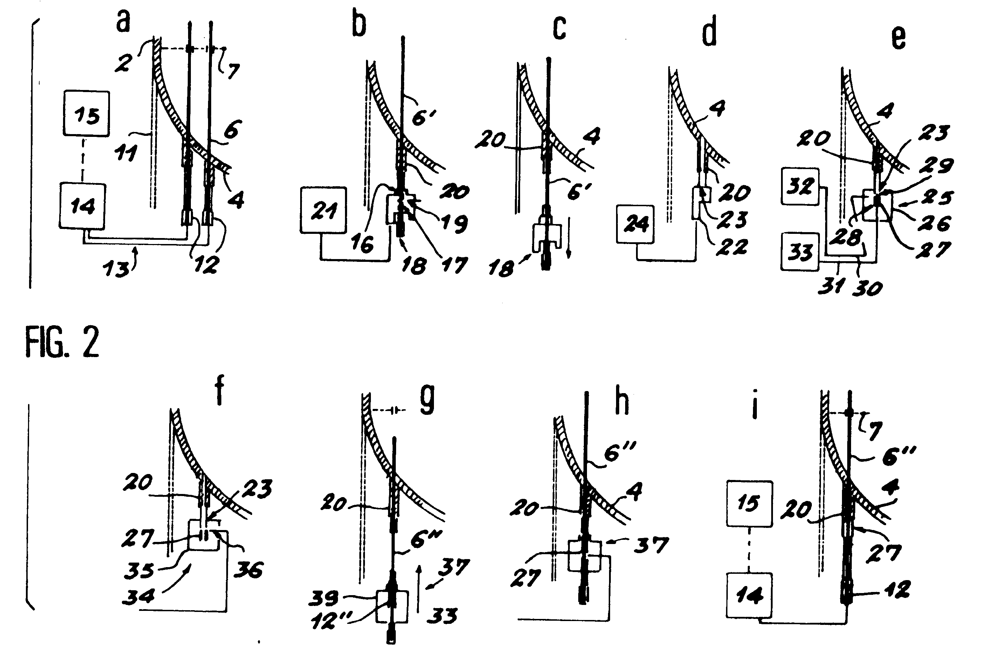

La figure 2 montre les différentes étapes du procédé de remplacement d'un élément chauffant selon l'invention, plus particulièrement décrit ici.

Les états initial et final sont indiqués sur la figure 2 par les lettres a et i, les étapes intermédiaires du procédé étant désignées par les lettres b à h.

En a, état initial, les éléments chauffants 6 sont connectés au niveau bas 12 des gaines, par des câbles 13 à des moyens 14 d'alimentation en puissance électrique de chauffe, eux-mêmes commandés par des moyens 15 de contrôle et de commande connus en eux-mêmes, comprenant par exemple un automate programmable.

Avant de procéder au remplacement d'un élément 6 défectueux, la cuve 2 du pressuriseur 1 est vidée et les câbles 13 correspondants à l'élément défectueux sont déconnectés.

L'étape b consiste à fixer en deux emplacements 16 et 17, espacés verticalement, de la tubulure 5 de l'élément 6′ à remplacer, un dispositif 18 de coupe transversale et automatique de ladite tubulure et à couper automatiquement ladite tubulure avec ledit dispositif à un emplacement 19 situé entre les deux emplacements 16 et 17 de fixation, sans entamer ou entamer sensiblement l'élément 6′ qu'elle contient.

Le dispositif 18 restant fixé au-dessus et au-dessous de la coupe aux emplacements 16 et 17, la portion de tubulure coupée et soudée aux moyens de butée de l'élément 6′, est maintenue contre la portion 20 restée solidaire du fond de la cuve, ce qui évite à l'élément 6′ de tomber sous l'effet de son propre poids.

Des moyens 21 d'alimentation électrique et de commande à distance du dispositif 18 sont prévus.

Pour réaliser l'étape b, un seul opérateur est nécessaire. Sa tâche en milieu soumis à l'irradiation, se borne à fixer le dispositif 18 aux emplacements prévus de la tubulure 7.

Les opérations de coupe et de maintien de l'élément pendant et après la coupe sont, en effet, automatiques, la coupe étant par ailleurs commandée à distance.

L'étape c consiste à enlever l'élément 6′ défectueux de la cuve. Pour ce faire, un opérateur détache le dispositif 18 de la portion de tubulure 20 et vient récupérer l'élément 6′ qui est glissé vers le bas en dehors de ladite portion de tubulure 20 restée solidaire de la cuve comme indiqué sur la figure 2, étape c.

L'étape d comprend les opérations suivantes :
- Fixation sur la portion de tubulure 20 d'un appareil 22 de chanfreinage automatique de l'extrémité 23 de la portion de tubulure 20, et
- chanfreinage automatique de ladite extrémité.

Ici encore des moyens 24 d'alimentation électrique et de commande à distance de l'appareil 22 sont prévus, l'intervention d'un opérateur seulement pendant un temps limité étant nécessaire pour fixer l'appareil 22.

Une fois l'opération de chanfreinage effectuée, l'appareil 22 est enlevé de la portion de tubulure 20.

Au cours de l'étape e, on commence par fixer à la portion 20 de tubulure restée solidaire de la cuve, un premier dispositif 25 de soudage automatique comprenant une chambre sensiblement étanche 26, dans laquelle un manchon 27 de même diamètre interne et externe que la tubulure a été préalablement mis en place, ledit dispositif de soudage positionnant automatiquement l'extrémité supérieure du manchon dans l'axe de la tubulure et contre l'extrémité chanfreinée 23 et comprenant une tête de soudage interne 28, apte à souder automatiquement la face interne de l'extrémité supérieure 29 du manchon 27 avec la face interne de l'extrémité chanfreinée 23 de la portion de tubulure 20. Puis, on soude automatiquement lesdites faces internes l'une avec l'autre sur l'ensemble de leurs circonférences par une passe de soudage TIG, (Tungsten Inert Gas) sous argon, sans métal d'apport, en injectant de l'argon au niveau de la soudure et en maintenant simultanément le manchon et l'extrémité de portion de tubulure sous argon dans la chambre 26 sensiblement étanche, alimentée en permanence en argon, pour compenser les débits de fuite.

Les alimentations en argon 30 et en courant de soudage 31 se font automatiquement et à distance respectivement par des moyens 32 et 33 connus en eux-mêmes.

Tout type de courant de soudage est utilisable, qu'il soit continu, unidirectionnel, pulsé ou alternatif, mais on utilisera avantageusement un courant pulsé avec un ou plusieurs secteurs d'énergie, par exemple en respectant les paramètres suivants : intensité de soudage comprise entre de l'ordre de 40A et de l'ordre de 80A, et fréquence de soudage comprise entre 8 et 12 KHz, par exemple environ 10 KHz.

L'étape f consiste, après avoir enlevé le dispositif 25, à le remplacer par le dispositif 34 de soudage automatique sous argon comportant une chambre 35 sensiblement étanche de soudage de conception similaire à la chambre 26, une tête 36 de soudage externe à la tubulure, mais interne à la chambre 35, apte à souder automatiquement la face externe de l'extrémité supérieure du manchon 27 avec la face externe de l'extrémité 23 chanfreinée de portion de tubulure.

Puis, on soude automatiquement et à distance lesdites faces externes en réalisant deux passes de soudage TIG successives avec métal d'apport, sous argon, par exemple en utilisant également les moyens 32 et 33 (non représentés).

On enlève ensuite le dispositif 34 et on fixe de façon prédéterminée en position longitudinale et axiale, un élément chauffant neuf 6˝ au niveau de ses moyens de butée 9˝, dans un troisième dispositif 37 de soudage, comprenant une tête 38 de soudage externe aux moyens de butée de l'élément chauffant, et internes à une chambre de soudage 39 sensiblement étanche, de conception similaire aux chambres 26 et 35.

L'étape g consiste à introduire l'élément neuf 6˝ dans la tubulure 20 et la cuve 2, ce qui se fait manuellement par un ou deux opérateurs.

L'étape h comprend une première phase, de fixation du dispositif 37 sur la portion de tubulure 20 restée solidaire de la cuve et de plaquage automatique de l'extrémité supérieure des moyens de butée 9˝ contre l'extrémité inférieure du manchon 27.

Le prépositionnement de l'élément 6˝ dans le dispositif 37 de soudage et son plaquage automatique sur l'extrémité à souder une fois le dispositif 37 fixé au manchon, évite l'opération de pointage, ou fixation par points de soudure, des moyens de butée de l'élément sur le manchon avant l'opération de soudure proprement dite.

La deuxième phase de l'étape h consiste à souder automatiquement, sous argon injecté dans la chambre sensiblement étanche 39, la face externe de l'extrémité supérieure des moyens de butée avec la face externe de l'extrémité inférieure du manchon sur leurs circonférences. On réalise, par exemple, deux passes de soudage avec métal d'apport, en régime pulsé, et avec plusieurs secteurs d'énergie aux conditions de soudage suivantes: intensité de soudage comprise entre environ 20A et environ 70A, et tension de soudage comprise entre environ 10 Volts et environ 12 Volts.

Le soudage est par exemple commandé à distance par les mêmes moyens 32 et 33 que précédemment (non représentés).

Une fois le soudage effectué, l'élément chauffant est reconnecté aux moyens d'alimentation 14, comme indiqué sur l'état final représenté en i.

On va maintenant décrire plus précisémment un mode de réalisation des différents dispositifs mis en oeuvre dans le procédé selon l'invention plus particulièrement décrit ici.

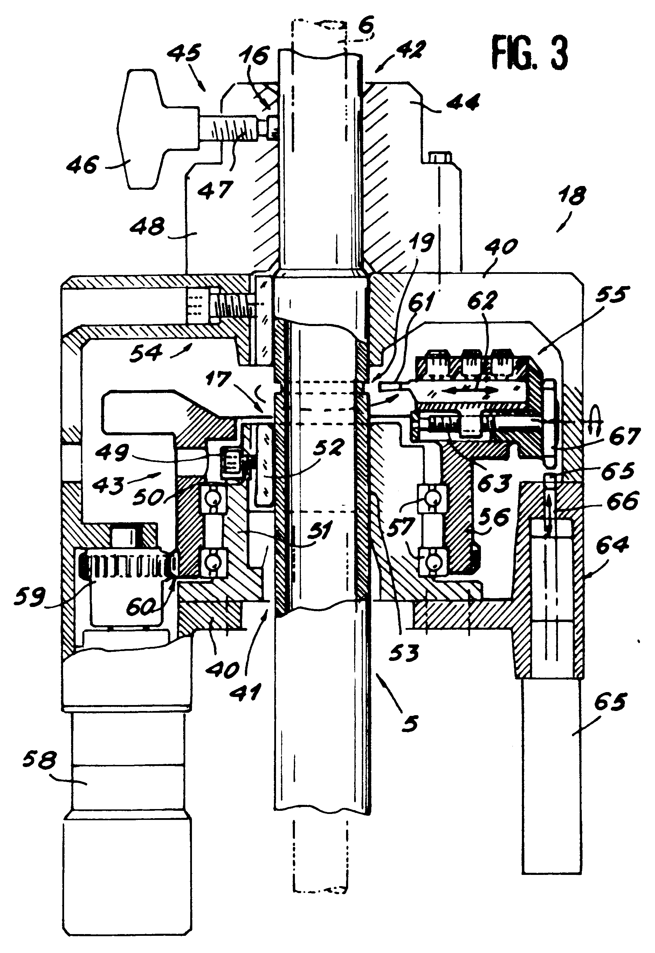

La figure 3 montre le dispositif 18 de coupe transversale de la tubulure 5.

Le dispositif 18 comprend un boitier 40 traversé de part en part par un évidement 41 propre à contenir la portion de tubulure qui doit être coupée.

Le boîtier 40 comprend des moyens de fixation supérieure 42 et des moyens de fixation inférieure 43 du boîtier sur la tubulure 5, respectivement aux emplacements 16 et 17 espacés verticalement, de ladite tubulure.

Les moyens 42 comprennent une pièce 44 verticalement solidaire du boîtier 40 et des moyens 45 de serrage de la pièce 44 contre la tubulure 5, constitués de façon connue en soi par un bouton rotatif 46 coopérant avec un alésage filté 47 percé dans une contre pièce 48 agencée pour être transversalement rapprochée de la pièce 44, par vissage du bouton 46, pour comprimer la tubulure à l'emplacement 16.

Les moyens de fixation inférieure 43 comprennent une vis 49 coopérant avec un alésage fileté 50 percé dans une pièce 51 solidaire du boitier 40. La vis est propre à comprimer la tubulure 5, via un coussinet d'appui 52, contre la face interne opposée 53 de l'évidement 41 du boitier 40, à l'emplacement 17 de ladite tubulure.

Des moyens de serrage intermédiaires 54, similaires aux moyens 43, achèvent de maintenir et de positionner exactement le boitier 40 par rapport à la tubulure.

Le dispositif 18 comprend, par ailleurs, une tronçonneuse 55 montée sur un support 56, lui-même monté rotativement sur la pièce 51 solidaire du boitier 40, par l'intermédiaire de roulements 57. Le support 56 est actionné en rotation par le moteur 58 via un pignon 59 engrennant sur une roue dentée 60 solidaire du support 56.

La tronçonneuse 55 est munie d'un outil 61 dont l'avance et le recul (flèche 62) s'effectue par le biais d'une vis sans fin 63, transversalement solidaire de la pièce 56. L'outil se déplace parallèlement à ladite vis dont la rotation est actionnée par un dispositif 64 débrayable, muni d'une roue dentée 65 déplaçable verticalement (voir flèche 66) pour coopérer avec une couronne dentée 67 solidaire de la vis 61. La rotation de la pièce 56 et l'avance de l'outil 61 sont commandés à distance et fonctionnent en automatique. L'outil est agencé pour attaquer la tubulure sur une profondeur déterminée permettant de ne pas entamer ou sensiblement entamer l'élément 6 à l'intérieur de ladite tubulure, et à un emplacement 19 situé entre les moyens inférieurs 43 de fixation et les moyens intermédiaires 54 eux-mêmes situés en dessous des moyens supérieurs 45 de fixation.

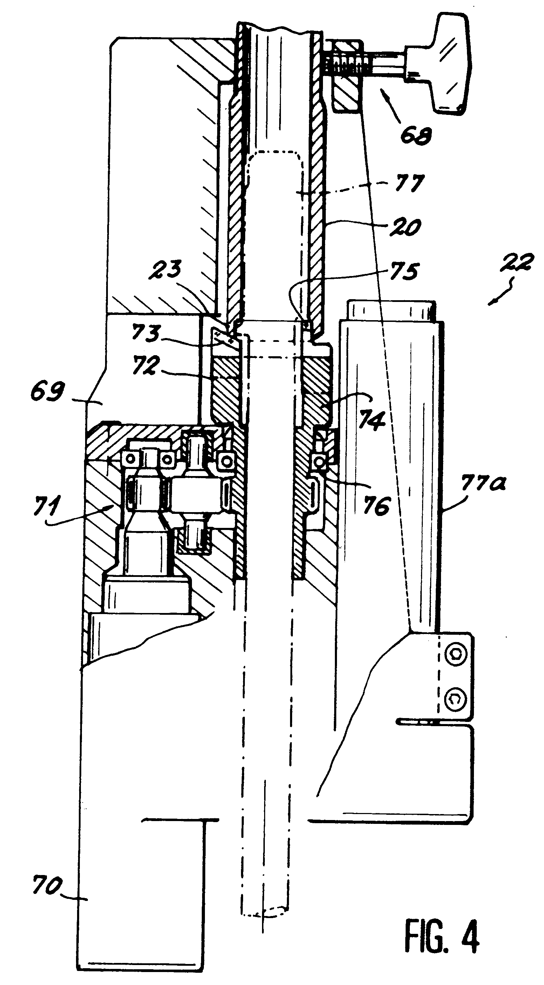

La figure 4 montre schématiquement le dispositif 22 de chanfreinage qui comprend des moyens de fixation 68, connus en eux-mêmes, du corps 69 du dispositif sur la portion 20 de tubulure restée solidaire du fond 4 de la cuve. Le dispositif 22 comprend un moteur électrique 70 commandé à distance et en automatique, agencé pour actionner en rotation, par l'intermédiaire d'un train 71 d'engrenages, un premier outil 72 muni d'une lame 73 externe de chanfreinage, et un deuxième outil 74 muni d'une lame 75 interne d'alésage, propres à usiner l'extrémité 23 de la portion 20 de tubulure. Les outils 72 et 74 sont solidaires l'un de l'autre, et montés rotativement sur le corps 69 par l'intermédiaire de roulements 76.

Le dispositif 22 comprend des moyens 77, en traits mixtes sur la figure 4, de centrage du dispositif 22 par rapport à la tubulure 20.

Des moyens 77a, par exemple pneumatiques, connus en eux-mêmes et agencés pour venir plaquer les lames des outils sur l'extrémité 23 de tubulure à chanfreiner, sont également prévus.

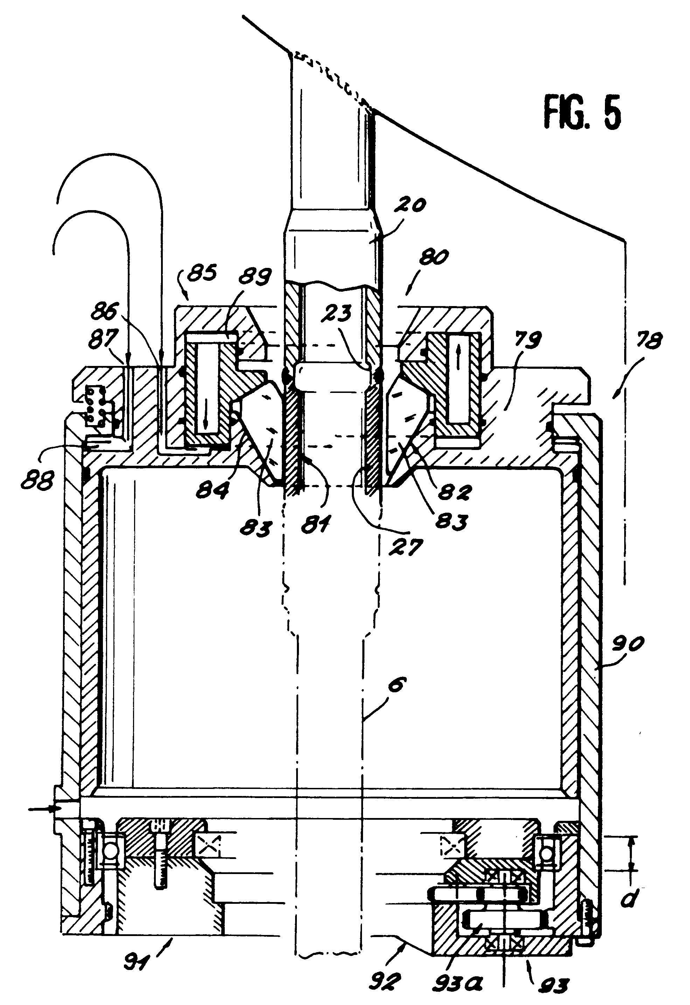

On a représenté sur la figure 5 un mode de réalisation 78 des chambres 26, 35 et 39, sensiblement étanches, de rétention du gaz neutre appartenant aux différents dispositifs 25, 34 et 37 de soudage utilisés dans le procédé selon l'invention plus particulièrement décrit ici.

La chambre 78 de la figure 5 comprend une paroi supérieure 79 percée d'une ouverture axiale 80 de passage de l'extrémité inférieure 81 de la première pièce à souder, pièce qui peut être la portion de tubulure restée solidaire du fond de cuve ou le manchon, (comme schématisé sur la figure 5) selon le cas. L'ouverture 80 comprend des moyens de fixation 82 de la chambre 78 sur ladite première pièce, par exemple constitués par deux mâchoires 83 en forme de biseaux, chacune étant agencée pour coopérer par glissement avec d'un côté une face interne 84 correspondante de l'ouverture 80, inclinée vers la tubulure par rapport à la verticale, et pour coopérer de l'autre côté avec la tubulure qu'elle vient comprimer transversalement avec une face agencée pour rester parallèle à la tubulure, par déplacement transversal du biseau.

Le déplacement est dû à des moyens pneumatiques 85, propres à déplacer verticalement les mâchoires 83 qui, en glissant sur les parois inclinées 84, se rapprochent ou s'écartent de la tubulure.

On a représenté une machoire 83 en contact avec la tubulure, à gauche de la figure 5 et l'autre machoire 83 écartée de la tubulure, à droite de la figure 5 pour mieux illustrer le fonctionnement desdites mâchoires qui fonctionnent dans la réalité simultanément de la même façon.

Lorsque de l'air comprimé est injecté par le canal 86, la machoire 83 est repoussée vers le haut (position écartée ou dégagée des mâchoires). Lorsque, inversement, de l'air comprimé est injecté par le canal 87 dans l'espace 88 qui communique (de façon cachée sur la figure 5) avec l'espace 89, la machoire 83 est repoussée vers le bas (position de contact ou de fixation de la chambre sur la tubulure 20 ou le manchon 27).

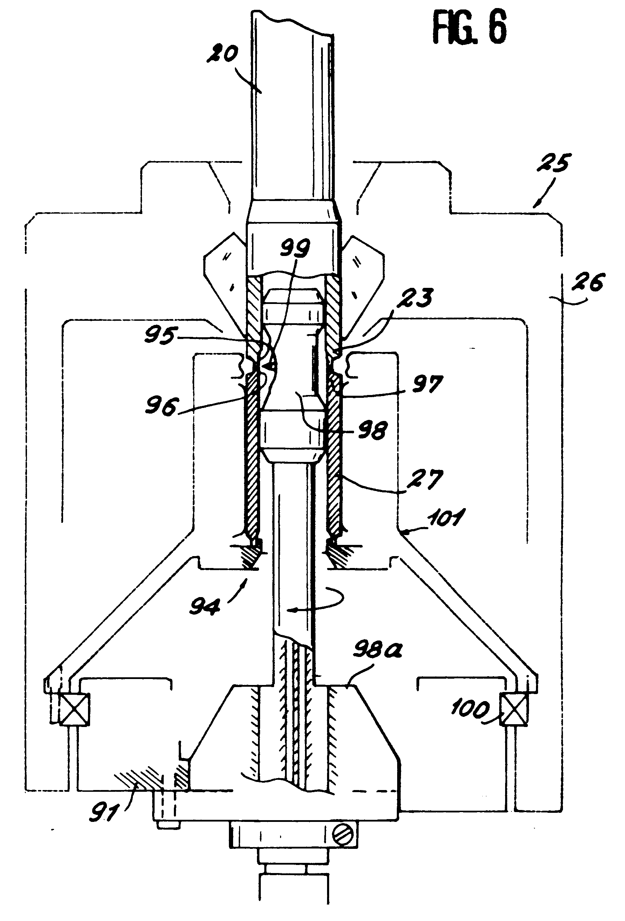

La chambre 78 comprend également des parois latérales 90, par exemple constituée par la paroi longitudinale d'un cylindre, et une paroi inférieure 91, percée d'une ouverture 92 et munie de moyens 94 de centrage transversal et/ou de maintien ou de butée longitudinale dans une position déterminée, par rapport à la chambre (voir figures 6 à 8), de la seconde pièce constituée par le manchon ou les éléments de butée d'élément neuf, selon le cas, ces moyens vont être détaillés par la suite. Ils sont avantageusement propres à plaquer longitudinalement l'extrémité supérieure de la seconde pièce contre l'extrémité inférieure de la première pièce.

Des moyens 93 de réglage en hauteur, par rapport aux parois latérales, de la paroi 91, sont par ailleurs prévus. Ils comprennent une roue dentée 93a de déplacement vertical de la paroi 91, de façon connue en soi, sur une distance d comme indiqué sur la figure 5.

La paroi inférieure 91 est, par ailleurs, montée rotativement autour de l'axe vertical de l'ouverture 80, sur les extrémités inférieures des parois 90.

La figure 6 montre le dispositif 25 de soudage de la face interne 95 de l'extrémité inférieure 23 de la portion 20 de tubulure avec la face interne 96 de l'extrémité supérieure 97 du manchon 27.

Le dispositif 25 comprend la chambre 26 schématisée en traits interrompus sur la figure 6 et similaire à la chambre 78 de la figure 5.

Il comprend également une tête 98 munie d'une torche 99 de soudage TIG (Tungsten Inert Gas), automatique, avantageusement alimentée en courant pulsé. Un pulsage rapide (f > 500 Hz) peut être superposé au pulsage thermique de base pour mieux maîtriser la forme du bain et agir sur la structure métallographique du métal fondu.

La tête 98 est fixée sur une pièce 98a fixée sur la paroi 91, elle-même montée rotativement par l'intermédiaire des roulements 100, et comme déjà indiqué, sur la portion inférieure des parois 90 de la chambre 26.

Le soudage est commandé par les moyens indiqués en 33 sur la figure 2, comprenant par exemple, de façon connue en soi, un séquenceur piloté par un microprocesseur qui gère notamment les fonctions suivantes : courant de soudage (amorçage, soudage, évanouissement), rotation de la torche de la tête de soudage, balayage transversal de la torche et réglage de la distance électrode/pièces à souder.

Le dispositif 25 comprend de plus un support 101 de maintien et de positionnement du manchon 27 appartenant aux moyens 94 ci-dessus mentionnés et propre à maintenir et venir plaquer l'extrémité supérieure dudit manchon contre l'extrémité de tubulure chanfreinée lors du soudage.

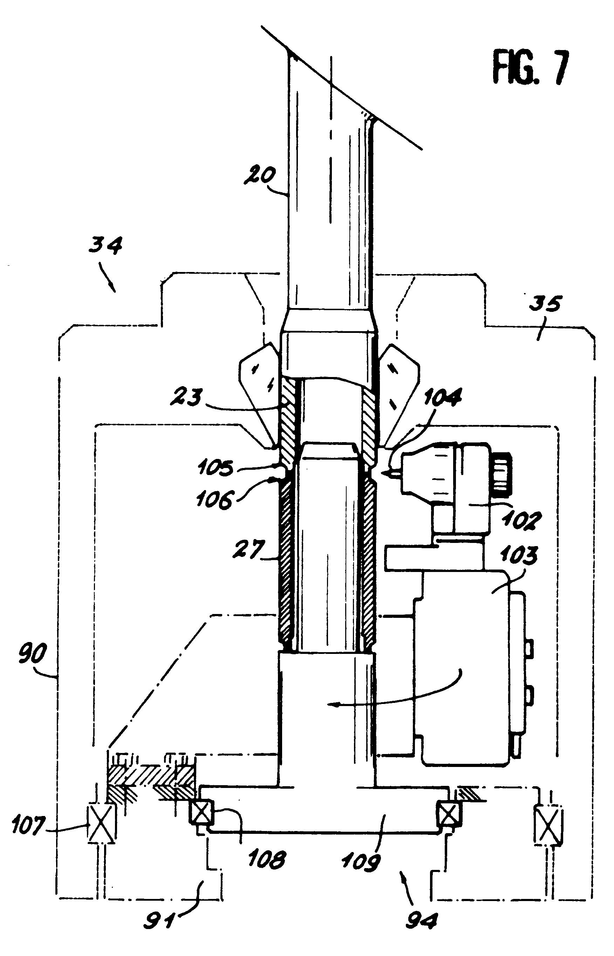

La figure 7 montre le dispositif de soudage 34 comprenant la chambre 35 similaire à la chambre 78 de la figure 5, (schématisée en traits interrompus sur la figure 7), une tête de soudage externe 102, connue en elle-même, placée à l'intérieur de la chambre, montée sur un support 103 et comprenant une torche de soudage TIG 104 apte à souder automatiquement la face externe 105 de l'extrémité inférieure 23 de la tubulure avec la face externe 106 de l'extrémité supérieure du manchon.

Le support 103 est fixé sur la paroi inférieure 91 montée rotativement par rapport à l'axe des pièces à souder, d'un côté sur l'extrémité inférieure des parois 90 de la chambre 35 via les roulements 107, et de l'autre côté via des roulements 108 sur une pièce 109 de centrage et de positionnement de la chambre 35 par rapport aux pièces à souder, venant en butée sur l'extrémité inférieure du manchon.

La rotation de la tête de soudage est effectuée automatiquement grâce à des moyens connus en eux-mêmes (non représentés).

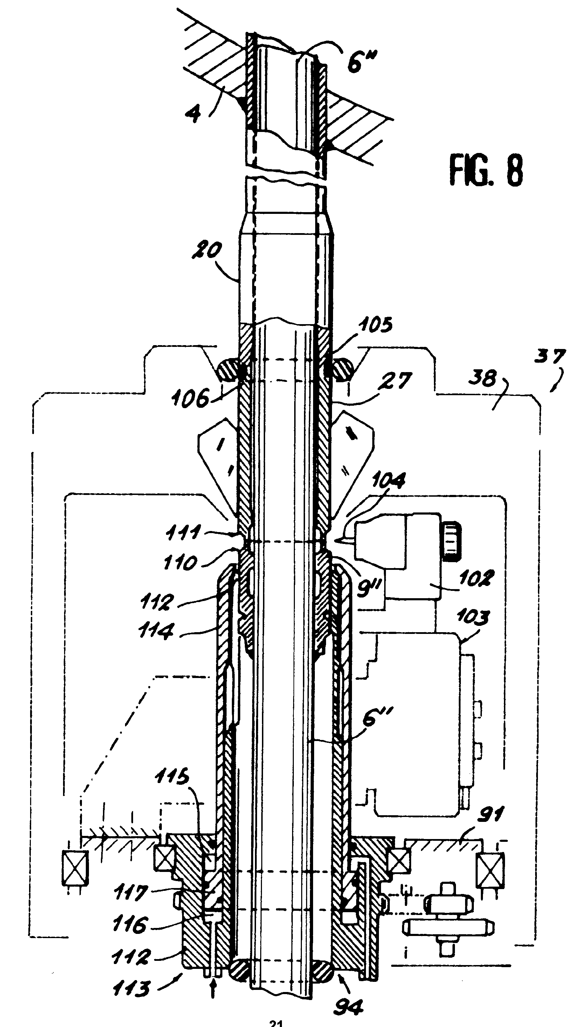

Sur la figure 8, on a représenté le dispositif 37 de soudage de la face externe 110 de l'extrémité supérieure des moyens de butée 9˝ de l'élément neuf 6˝, sur la face externe 111 de l'extrémité inférieure du manchon 27, préalablement chanfreinée en atelier.

Le dispositif 37 est sensiblement similaire au dispositif 34 et comprend une tête de soudage 102 fixée sur un support 103 solidaire de la paroi 91, elle même montée rotativement d'un côté sur l'extrémité inférieure des parois 90 et de l'autre côté sur une pièce 112 solidaire de l'élément neuf 6˝ à souder.

La pièce 112 est une pièce de centrage transversal et de maintien longitudinal, par rapport à la chambre 38 (figurée en traits interrompus sur la figure 8) de l'élément 6˝.

Elle est munie de moyens 113 actionnés pneumatiquement, agencés pour plaquer longitudinalement les moyens de butée 9˝ contre le manchon 23 avec une pression déterminée. Ces moyens 113 comprennent une pièce 114 fixable de façon amovible sur les moyens de butée 9˝, enserrés de façon connue en elle-même, dans ladite pièce 114 de forme sensiblement tubulaire.

La pièce 114 est déplaçable verticalement entre deux positions, en alimentant en air comprimé l'une ou l'autre des deux chambres 115 et 116 formées dans un évidemment pratiqué dans la pièce 112, de part et d'autre d'une collerette 117 horizontale solidaire en partie basse de ladite pièce 114, collerette qui coopère jointivement avec ledit évidemment.

L'invention ne se limite pas aux modes de réalisation plus particulièrement décrits ici. Elle en couvre au contraire toutes les variantes et notamment celles où on utilise le soudage MIG où encore celles où le nombre de passes externes de soudage effectué est différent.

## Revendications

1. Procédé de remplacement d'un élément chauffant dans un pressuriseur (1) de réacteur nucléaire à eau sous-pression, pressuriseur du type comprenant une cuve (2) de résistance à la pression comportant des tubulures (5), externes à la cuve, de traversée étanche du fond de cuve par des éléments chauffants (6, 6′, 6˝) verticaux électriques à effet Joule, et lesdits éléments chauffant verticaux comprenant chacun une gaine cylindrique en alliage métallique pénétrant dans la cuve au travers d'une tubulure correspondante desdites tubulures externes, chaque gaine étant munie, dans sa partie basse, de moyens (9, 9′, 9˝) de butée longitudinale contre l'extrémité inférieure (10) de ladite tubulure externe correspondante sur laquelle lesdits moyens de butée sont soudés, procédé suivant lequel :
(a) on coupe transversalement la tubulure externe (5) de l'élément (6′) à remplacer, sans entamer ou sensiblement entamer ledit élément (6′) traversant ladite tubulure,
(b) on enlève ledit élément (6′) de la portion de tubulure restée solidaire de la cuve et,
(c) on chanfreine l'extrémité (23) de ladite portion, caractérisé en ce que
(d) on soude automatiquement sous atmosphère inerte ou sensiblement inerte, la face interne (95) de l'extrémité (23) de ladite portion avec la face interne (96) de l'extrémité supérieure (97) d'un manchon (27) de même diamètre interne et externe, préalablement positionné bout à bout avec ladite portion,
(e) on soude automatiquement, sous atmosphère inerte ou sensiblement inerte, la face externe (105) de l'extrémité (23) de ladite portion avec la face externe (106) de l'extrémité supérieure (97) dudit manchon,
(f) on introduit dans la cuve (2) via le manchon (27) et la portion de tubulure (20) correspondante, la gaine de l'élément chauffant neuf (6˝) jusqu'à ce que les moyens (9˝) de butée de ladite gaine soient en contact avec l'extrémité inférieure dudit manchon, lesdits moyens de butée étant dans un alliage provenant d'une même coulée de fabrication que celui du manchon, et
(g) on soude automatiquement la face externe (110) de l'extrémité supérieure des moyens (9˝) de butée avec la face externe de l'extrémité inférieure du manchon.

2. Procédé selon la revendication 1, caractérisé en ce que pour souder automatiquement le manchon à la portion de tubulure,
- on fixe à ladite portion de tubulure (20) restée solidaire de la cuve, un premier dispositif (25) de soudage automatique sous atmosphère inerte ou sensiblement inerte, commandé à distance, dans lequel le manchon (27) a été préalablement mis en place, ledit dispositif positionnant automatiquement l'extrémité supérieure (97) du manchon dans l'axe de la tubulure (20) et contre l'extrémité chanfreinée (23) de ladite portion, et comprenant une tête (93) de soudage interne apte à souder automatiquement la face interne (96) de l'extrémité supérieure du manchon avec la face interne (95) de l'extrémité chanfreinée de ladite portion de tubulure restée solidaire de la cuve,
- on soude automatiquement lesdites faces internes l'une avec l'autre sur l'ensemble de leurs circonférences,
- on enlève le premier dispositif (25) de soudage automatique de ladite portion de tubulure,
- on fixe à ladite portion, un deuxième dispositif (34) de soudage automatique sous atmosphère inerte ou sensiblement inerte, commandé à distance, comportant une tête de soudage externe (102) apte à souder automatiquement la face externe (106) de l'extrémité supérieure du manchon (27), avec la face externe (105) de l'extrémité chanfreinée de la portion de tubulure restée solidaire de la cuve, et
- on soude automatiquement lesdites faces externes l'une avec l'autre sur l'ensemble de leurs circonférences.

3. Procédé selon l'une quelconque des revendications 1 et 2, caractérisé en ce que avant introduction de la gaine de l'élément chauffant neuf (6˝) dans la cuve, on fixe à ladite gaine un troisième dispositif (37) de soudage au niveau des moyens de butée (9˝) de ladite gaine, puis, pour réaliser le soudage desdits moyens de butée (9˝) avec le manchon (27),
- on fixe audit manchon (27) ledit troisième dispositif (37) agencé pour positionner automatiquement l'extrémité supérieure des moyens de butée dudit élément neuf contre l'extrémité inférieure du manchon, ledit dispositif comprenant une tête de soudage externe (102) apte à souder automatiquement la face externe (10) de l'extrémité supérieure des moyens de butée avec la face externe (111) de l'extrémité inférieure du manchon, et
- on soude automatiquement lesdites faces externes l'une avec l'autre sur l'ensemble de leurs circonférences.

4. Procédé selon l'une quelconque des revendications précédentes, caractérisé en ce que pour couper transversalement la tubulure externe de l'élément à remplacer,
- on fixe en deux emplacements (16, 17), espacés verticalement, de la tubulure externe (5) de l'élément chauffant (6′) à remplacer, un dispositif (18) commandé à distance, de coupe transversale et automatique de ladite tubulure, et
- on coupe transversalement et automatiquement ladite tubulure (5) avec ledit dispositif (18) entre les deux emplacements de fixation, la portion de tubulure coupée et soudée aux moyens de butée (9′) de l'élément (6′) restant maintenue par ledit dispositif, contre la portion de tubulure (20) restée solidaire de la cuve après la coupe.

5. Procédé selon l'une quelconque des revendications précédentes, caractérisé en ce que on réalise automatiquement le chanfreinage de l'extrémité de la portion de tubulure restée solidaire de la cuve.

6. Procédé selon l'une quelconque des revendications précédentes, caractérisé en ce que le soudage de l'extrémité supérieure du manchon (27) avec l'extrémité inférieure de la portion de tubulure (20) est constitué par une passe de soudage sans métal d'apport sur les faces internes respectives desdites extrémités inférieures et supérieures et deux passes de soudage avec métal d'apport sur les faces externes respectives desdites extrémités inférieures et supérieures.

7. Procédé selon l'une quelconque des revendications précédentes, caractérisé en ce que le soudage est du type TIG, le courant de soudage étant pulsé.

8. Procédé selon l'une quelconque des revendications précédentes, caractérisé en ce que l'atmosphère sensiblement inerte est du gaz inerte hydrogèné à de l'ordre de 3% en poids d'hydrogène par rapport au poids de gaz inerte.

9. Dispositif (25, 34, 37) de soudage sous gaz inerte de l'extrémité inférieure d'une première pièce verticale cylindrique (20, 27) avec l'extrémité supérieure d'une seconde pièce verticale cylindrique (27, 9˝) de même diamètre disposée dans le prolongement axial de ladite première pièce, caractérisé en ce qu'il comprend :
- une chambre (78) sensiblement étanche de rétention du gaz comprenant une paroi supérieure (79) percée d'une ouverture (80) de passage de l'extrémité inférieure de la première pièce, ladite ouverture étant munie de moyens de fixation (82) de ladite chambre sur ladite première pièce, des parois latérales, et une paroi inférieure (91), montée rotativement sur les parois latérales autour de l'axe de ladite pièce, ladite chambre étant munie de moyens (93) de centrage transversal et de maintien longitudinal, par rapport à la chambre (78), de la seconde pièce, lesdits moyens étant agencés pour plaquer longitudinalement et dans leur prolongement axial l'extrémité supérieure de ladite seconde pièce contre l'extrémité inférieure de la première pièce à l'intérieur de ladite chambre,
- des moyens de soudage (98, 102) fixés à ladite paroi inférieure agencés pour souder les extrémités inférieure et supérieure respectives desdites pièces, et
- des moyens de rotation automatique de ladite paroi inférieure autour de l'axe desdites pièces par rapport à la chambre.

10. Dispositif selon la revendication 9, caractérisé en ce que les moyens de soudage comprennent une tête de soudage interne (98) apte à souder automatiquement la face interne de l'extrémité inférieure de la première pièce avec la face interne de l'extrémité supérieure de la seconde pièce.

11. Dispositif selon la revendication 9, caractérisé en ce que les moyens de soudage comprennent une tête de soudage externe (102) apte à souder automatiquement la face externe de l'extrémité inférieure de la première pièce, avec la face externe de l'extrémité supérieure de la seconde pièce.

12. Dispositif selon l'une quelconque des revendications 9 à 11, caractérisé en ce que les moyens de fixation de la chambre sur la première pièce comprennent des mâchoires (83) de serrage sur ladite première pièce, actionnées pneumatiquement.

## Patentansprüche

1. Verfahren für das Ersetzen einer Heizung eines Druckausgleichgefäßes (1) in einem Druckwasser-Kernreaktor, wobei das Druckausgleichsgefäß des Typs mit druckfestem Behälter (2) ist, der außerhalb des Behälters liegende Rohre (5) zur dichten Durchführung von vertikalen elektrischen Jouleschen Heizelementen durch den Behälterboden aufweist, wobei jedes dieser vertikalen Heizelemente eine zylindrische Verkleidung aus Metall-Legierung aufweist, die durch eines der entsprechenden Außenrohre hindurch in den Behälter hineinragt, wobei jede Verkleidung in ihrem unteren Teil mit einer Einrichtung (9,9′,9˝) zum Anschlag in Längsrichtung gegen das untere Ende (10) des entsprechenden Außenrohrs versehen ist, an das die Anschlageinrichtung angeschweißt ist,
in dem
(a) man das Außenrohr (5) des zu ersetzenden Elements (6′) quer durchschneidet, ohne das durch das Rohr laufende Element (6′) anzuschneiden oder im wesentlichen anzuschneiden,
(b) man das Element (6′) von dem mit dem Behälter fest verbunden bleibenden Rohrabschnitt entfernt, und
(c) man das Ende (23) des Abschnitts abschrägt, dadurch gekennzeichnet, daß
(d) man unter einer inerten oder im wesentlichen inerten Atmosphäre die Innenfläche (95) des Endes (23) des Abschnitts mit der Innenfläche (96) des oberen Endes (97) einer Hülse (27) gleichen Innen- und Außendurchmessers automatisch verschweißt, die zuvor mit dem Abschnitt End an End positionniert worden ist,
(e) man unter einer inerten oder im wesentlichen inerten Atmosphäre die Außenfläche (105) des Endes (23) des Abschnitts mit der Außenfläche (106) des oberen Endes (97) der Hülse automatisch verschweißt,
(f) man durch die Hülse (27) und den entsprechenden Rohrabschnitt (20) die Verkleidung des neuen Heizelements (6˝) in den Behälter einführt, bis daß die Anschlageinrichtung (9˝) mit dem unteren Ende der Hülse in Kontakt ist, wobei die Anschlageinrichtung aus einer Legierung ist, die aus der gleichen Fertigungsschmelze wie die der Hülse stammt, und
(g) man die Außenfläche (110) des oberen Endes der Anschlageinrichtung (9˝) mit der Außenfläche des unteren Endes der Hülse automatisch verschweißt.

2. Verfahren nach Anspruch 1, dadurch gekennzeichnet, daß man zum automatischen Verschweißen der Hülse an den Rohrabschnitt
- an den Rohrabschnitt (20), der mit dem Behälter fest verbunden bleibt, eine erste ferngesteuerte Vorrichtung (25) zum automatischen Schweißen unter inerter oder im wesentlichen inerter Atmosphäre befestigt, in der die Hülse (27) zuvor angebracht worden ist, wobei die Vorrichtung automatisch das obere Ende (97) der Hülse zur Achse des Rohrs (20) und an das abgeschrägte Ende (23) des Abschnitts positioniert, und einen Kopf (93) zum Innenschweißen aufweist, der automatisch die Innenfläche (96) des oberen Endes der Hülse mit der Innenfläche (95) des abgeschrägten Endes des mit dem Behälter fest verbunden bleibenden Rohrabschnitts schweißen kann,
- die Innenflächen über ihren gesamten Umfang automatisch miteinander verschweißt,
- die erste Vorrichtung (25) zum automatischen Schweißen von dem Rohrabschnitt entfernt,
- an den Abschnitt eine zweite ferngesteuerte Vorrichtung (34) zum automatischen Schweißen unter inerter oder im wesentlichen inerter Atmosphäre mit einem Kopf zum Außenschweißen (102) befestigt, der die Außenfläche (106) des oberen Endes der Hülse (27) mit der Außenfläche (105) des abgeschrägten Endes des mit dem Behälter fest verbunden bleibenden Rohrabschnitts automatisch verschweißt, und
- die Außenflächen über ihren gesamten Umfang automatisch miteinander verschweißt.

3. Verfahren nach einem der Ansprüche 1 und 2, dadurch gekennzeichnet, daß man vor dem Einführen der Verkleidung des neuen Heizelements (6˝) in den Behälter an der Verkleidung eine dritte Schweißvorrichtung (37) in Höhe der Einrichtung (9˝) zum Anschlagen der Verkleidung befestigt, dann, um das Verschweißen der Anschlageinrichtung (9˝) mit der Hülse (27) durchzuführen,
- befestigt man an der Hülse (27) die dritte Vorrichtung (37), die zum automatischen Positionieren des oberen Endes der Einrichtung zum Anschlagen des neuen Elements gegen das untere Ende der Hülse vorgesehen ist, wobei die Vorrichtung einen Kopf zum Außenschweißen (102) aufweist, der die Außenfläche (10) des oberen Endes der Anschlageinrichtung mit der Außenfläche (111) des unteren Endes der Hülse verschweißen kann, und
- verschweißt man automatisch die Außenflächen über ihren gesamten Umfang miteinander.

4. Verfahren nach einem der vorstehenden Ansprüche, dadurch gekennzeichnet, daß man zum Durchschneiden des Außenrohrs des zu ersetzenden Elements,
- an zwei vertikal beabstandeten Stellen (16,17) des Außenrohrs (5) des zu ersetzenden Heizelements (6′) eine ferngesteuerte Vorrichtung (18) zum automatischen Durchschneiden des Rohrs anbringt, und
- automatisch das Rohr (5) mit der Vorrichtung (18) zwischen den zwei Befestigungsstellen durchschneidet, wobei der abgeschnittene und an die Anschlageinrichtung (9′) des Elements (6′) geschweißte Rohrabschnitt von der Vorrichtung gegen den nach dem Durchschneiden mit dem Behälter fest verbunden bleibenden Rohrabschnitt gehalten bleibt.

5. Verfahren nach einem der vorstehenden Ansprüche, dadurch gekennzeichnet, daß man das Abschrägen des Endes des mit dem Behälter fest verbunden bleibenden Rohrabschnitts automatisch durchführt.

6. Verfahren nach einem der vorstehenden Ansprüche, dadurch gekennzeichnet, daß das Verschweißen des oberen Endes der Hülse (27) mit dem unteren Ende des Rohrabschnitts (20) aus einem Schweißdurchgang ohne Metallzufuhr auf die jeweiligen Innenflächen der unteren und oberen Enden und zwei Schweißdurchgängen mit Metallzufuhr auf die jeweiligen Außenflächen der unteren und oberen Enden besteht.

7. Verfahren nach einem der vorstehenden Ansprüche, dadurch gekennzeichnet, daß das Schweißen vom Typ TIG ist, wobei der Schweißstrom gepulst ist.

8. Verfahren nach einem der vorstehenden Ansprüche, dadurch gekennzeichnet, daß die im wesentlichen inerte Atmosphäre aus Inertgas besteht, das in der Größenordnung von 3 Gewichtsprozent Waserstoff im Verhältnis zum Gewicht des Inertgases hydriert ist.

9. Vorrichtung (25, 34, 37) zum Verschweißen unter Inertgas des unteren Endes eines ersten vertikalen zylindrischen Stücks (20, 27) mit dem oberen Ende eines zweiten vertikalen zylindrischen Stücks (27,9˝) gleichen Durchmessers, das in der axialen Verlängerung des ersten Stücks angeordnet ist, gekennzeichnet durch:
- eine im wesentlichen gasdichte Kammer (78) mit einer Deckenwand (79), die mit einer Öffnung (80) zum Durchführen des unteren Endes des ersten Stücks durchbohrt ist, wobei die Öffnung mit einer Einrichtung (82) zum Befestigen der Kammer auf dem ersten Stück versehen ist, Seitenwänden und einer Bodenwand (91), die um die Achse des Stücks drehbar auf den Seitenwänden angebracht ist, wobei die Kammer mit einer Einrichtung (93) zur Zentrierung in Querrichtung und zur Fixierung in Längsrichtung bezüglich der Kammer (78) des zweiten Stücks versehen ist, wobei die Einrichtung vorgesehen ist, um im Inneren der Kammer in Längsrichtung und in ihrer axialen Verlängerung das obere Ende des zweiten Stücks über das untere Ende des ersten Stücks zu ziehen,
- eine an der unteren Wand befestigte Schweißeinrichtung (98, 102) zum Verschweißen der jeweiligen unteren und oberen Enden der Stücke, und
- eine Einrichtung zum automatischen Drehen der Bodenwand um die Achse der Stücke bezüglich der Kammer.

10. Vorrichtung nach Anspruch 9, dadurch gekennzeichnet, daß die Schweißeinrichtung einen Kopf zum Innenschweißen (98) aufweist, der automatisch die Innenfläche des unteren Endes des ersten Stücks mit der Innenfläche des oberen Endes des zweiten Stücks verschweißen kann.

11. Vorrichtung nach Anspruch 9, dadurch gekennzeichnet, daß die Schweißeinrichtung einen Kopf zum Außenschweißen (102) aufweist, der automatisch die Außenfläche des unteren Endes des ersten Stücks mit der Außenfläche des oberen Endes des zweiten Stücks verschweißen kann.

12. Vorrichtung nach einem der Ansprüche 9 bis 11, dadurch gekennzeichnet, daß die Einrichtung zur Befestigung der Kammer auf dem ersten Stück pneumatisch betriebene Schließbacken (83) auf dem ersten Stück aufweist.

## Claims

1. Process for replacing a heater element in a pressurizer (1) of a pressurized-water nuclear reactor, a pressurizer of the type including a pressure-resistant vessel (2) comprising pipes (5) external to the vessel, for a leakproof passage through the bottom of the vessel of vertical electrical heating Joule effect elements (6, 6′, 6˝), and each of the said vertical heater elements including a cylindrical sheath made of metal alloy, entering the vessel through a corresponding pipe of the said external pipes, each sheath being provided in its bottom part with means (9, 9′, 9˝) for lengthwise abutment against the lower end (10) of the said corresponding external pipe to which the said abutment means are welded, wherein :
(a) the external pipe (5) of the element (6′) to be replaced is cut transversely without cutting into, or substantially cutting into,the said element (6′) passing through the said pipe,
(b) the said element (6′) is removed from the section of pipe which has remained integrally attached to the vessel, and
(c) the end (23) of the said section is chamfered, characterized in that
(d) the inner face (95) of the end (23) of the said section is welded automatically under inert or substantially inert atmosphere to the inner face (96) of the upper end (97) of a sleeve (27) of the same inner and outer diameter, positioned beforehand end-to-end with the said section,
(e) the outer face (105) of the end (23) of the said section is welded automatically under inert or substantially inert atmosphere to the outer face (106) of the upper end (97) of the said sleeve,
(f) the sheath of the new heating element (6˝) is introduced into the vessel (2) through the sleeve (27) and the corresponding pipe section (20) until the abutment means (9˝) of the said sheath are in contact with the lower end of the said sleeve, the said abutment means being made of an alloy originating from the same manufacturing casting as that of the sleeve, and
(g) the outer face (110) of the upper end of the abutment Means (9˝) is welded automatically to the outer face of the lower end of the sleeve.

2. Process according to Claim 1, characterized in that, to weld the sleeve automatically to the pipe section,
- a first, remotely controlled, device (25) for automatic welding under inert or substantially inert atmosphere is secured to the said pipe section (20) which has remained integrally attached to the vessel, the said device, in which the sleeve (27) has been placed beforehand, automatically positioning the upper end (97) of the sleeve on the axis of the pipe (20) and against the chamfered end (23) of the said section, and including an internal welding head (93) capable of automatically welding the inner face (96) of the upper end of the sleeve to the inner face (95) of the chamfered end of the said pipe section which has remained integrally attached to the vessel,
- the said inner faces are welded automatically to one another over the whole of their circumferences,
- the first automatic welding device (25) is removed from the said pipe section,
- a second remotely controlled device (34) for automatic welding under inert or substantially inert atmosphere is secured to the said section, the device comprising an external welding head (102) capable of automatically welding the outer face (106) of the upper end of the sleeve (27) to the outer face (105) of the chamfered end of the pipe section which has remained integrally attached to the vessel, and
- the said outer faces are welded automatically to one another, over the whole of their circumferences.

3. Process according to either of Claims 1 and 2, characterized in that, before introducing the sheath of the new heating element (6˝) into the vessel, a third device (37) for welding at the abutment means (9˝) of the said sheath is secured to the said sheath and then, to carry out the welding of the said abutment means (9˝) to the sleeve (27),
- the said third device (37) arranged for automatically positioning the upper end of the abutment means of the said new element against the lower end of the sleeve is secured to the said sleeve (27), the said device including an external welding head (102) capable of automatically welding the outer face (10) of the upper end of the abutment means to the outer face (111) of the lower end of the sleeve, and
- the said outer faces are welded automatically to one another over the whole of their circumferences.

4. Process according to any one of the preceding claims, characterized in that, to cut transversely the external pipe of the element to be replaced,
- a remotely controlled device (18) for transverse and automatic cutting of the said pipe is secured to two points (16, 17), vertically apart, of the external pipe (5) of the heater element (6′) to be replaced, and
- the said pipe (5) is cut transversely and automatically with the said device (18) between the two securing points, the pipe section cut and welded to the means for abutment (9′) of the element (6′) remaining held by the said device against the pipe section (20) which has remained integrally attached to the vessel after the cutting.

5. Process according to any one of the preceding claims, characterized in that the chamfering of the end of the pipe section which has remained integrally attached to the vessel is carried out automatically.

6. Process according to any one of the preceding claims, characterized in that the welding of the upper end of the sleeve (27) to the lower end of the pipe section (20) consists of a welding run without added metal on the respective inner faces of the said lower and upper ends and two welding runs with added metal on the respective outer faces of the said lower and upper ends.

7. Process according to any one of the preceding claims, characterized in that the welding is of the TIG type, the welding current being pulsed.

8. Process according to any one of the preceding claims, characterized in that the substantially inert atmosphere is inert gas hydrogenated with of the order of 3 % by weight of hydrogen relative to the weight of inert gas.

9. Device (25, 34, 37) for welding under inert gas of the lower end of a first cylindrical vertical component (20, 27) to the upper end of a second cylindrical vertical component (27, 9˝) of the same diameter, arranged in the axial extension of the said first component, characterized in that it includes:
- a substantially leakproof chamber (78) for retaining the gas, including an upper wall (79), pierced with a passage opening (80) for the lower end of the first component, the said opening being provided with means (82) for securing the said chamber to the said first component, side walls, and a lower wall (91) mounted so as to rotate on the side walls about the axis of the said component, the said chamber being provided with means (93) for transverse centering and for lengthwise holding, relative to the chamber (78) of the second component, the said means being arranged for pinning lengthwise and in the axial extension the upper end of the said second component against the lower end of the first component inside the said chamber,
- means for welding (98, 102) secured to the said lower wall and arranged for welding the respective lower and upper ends of the said components, and
- means for automatic rotation of the said lower wall about the axis of the said components in relation to the chamber.

10. Device according to Claim 9, characterized in that the means for welding include an internal welding head (98) capable of automatically welding the inner face of the lower end of the first component to the inner face of the upper end of the second component.

11. Device according to Claim 9, characterized in that the means for welding include an external welding head (102) capable of automatically welding the outer face of the lower end of the first component to the outer face of the upper end of the second component.

12. Device according to any one of Claims 9 to 11, characterized in that the means for securing the chamber to the first component include pneumatically actuated jaws (83) for clamping onto the said first component.
